# EUROPEAN PATENT APPLICATION

(11) **EP 4 141 523 A1**
(43) Date of publication of application: **01.03.2023**
(21) Application number: 22200614.0
(22) Date of filing: 19.05.2016
(51) Int. Cl.: G02B 27/01, A61B 5/117, G06V 10/147, G06V 40/19

(54) **TILT SHIFT IRIS IMAGING**

(30) Priority: 20.05.2015 US 201562164257 P
(62) Divisional of application: 16797320.5
(71) Applicant: Magic Leap, Inc., Plantation, FL 33322 (US)
(72) Inventor: KAEHLER, Adrian, Plantation, Florida, 33322 (US)
(74) Representative: Lecomte & Partners

(57) **Abstract**

This application relates to systems and methods for imaging the iris of an individual. The iris images may be taken with an off-axis imager and may be attached to a head-mounted system such as a pair of eyeglasses. In some instances, the iris images may be used for biometric recognition and identification.

## Description

### CROSS-REFERENCE TO RELATED APPLICATIONS

This application claims priority to U.S. Provisional Application Serial No. 62/164,257 filed on May 20, 2015.

### FIELD

This application relates to imaging systems and methods for biometric recognition and identification. The imaging systems and methods are generally applicable to iris recognition and identification in a one-to-one verification of identity, but can also be used in one-to-many identification situations. Specifically, off-axis imaging of the iris may be accomplished using these systems and methods.

### BACKGROUND

Biometrics is a process by which an individual's unique physical traits or characteristics are detected and recorded as a means of determining or confirming identity. Fingerprints, voice patterns, facial patterns, and retinal blood vessel patterns are several examples of distinguishing physical traits currently in use. Scanning of the human iris is also a well-known biometric method.

Iris verification is a one-to-one process by which a computed biometric code, called a "template", from an individual is compared to a previously stored biometric code to determine if the person is who he or she claims to be. On the other hand, iris identification is a one-to-many process in which a computed biometric template from an individual is compared to a database of many different biometric templates with the objective of determining the identity of the individual from a known population. The iris of the eye has a visible pattern that is unique to each person, including genetically identical individuals (i.e., identical twins). It also has a data-rich physical structure with sufficient information content to be used for discrimination between individuals. One advantage of using iris patterns as unique identifiers is that they are only weakly affected by aging, and thus can be used over the lifetime of an individual.

Several techniques have been developed to accurately image the iris for collection of biometric information. Many of these techniques require cooperation by the individual and/or that the image of the iris be taken from a camera located in front of the eye ("on-axis" or "in-line" with the iris). For example, when using the IriScan 2100 (IriScan, Marlton, N.J.) iris scanner, which includes a camera and monitor on an adjustable swivel, the subject must stand about a foot in front of the camera and adjust the swivel until a clear image of his/her eye can be seen on the monitor screen. He/she must then move slowly toward the camera, keeping the eye centered in a window of the monitor, until the camera captures an image. An iris code, which is a standard biometric template derived from the iris image, is then typically stored along with other data associated with a particular individual in a database, thereby completing an enrollment process. Later, when that same person needs to be verified, a new image of the eye is obtained in the same manner employed for enrollment, and used to compute an iris code which is then compared with the iris code on file. While this procedure is satisfactory for some applications, the need for self-alignment of the iris to adequately focus it for imaging prevents it from being sufficiently quick for certain other access control activities. Furthermore, if implemented in a head-mounted system such as glasses or goggles, this type of imager would block the user's view of the actual world.

Another system for imaging the iris is provided in U.S. 8,317,325 to Raguin et al. Instead of using information from a single eye, as typical of known iris recognition systems, the Raguin et al. system uses information from both the right and left iris of a person to enroll, identify, or verify the person. Additionally, the system includes a processor that uses images of the two eyes to determine a head tilt angle between a virtual line extending between the two eyes, and rotates the left and right iris images in accordance with the angle to substantially remove head tilt, if present. However, like the IriScan 2100, the user (or the imaging device) must translate along the axis of the imaging device to adjust the focus of the iris.

In yet another iris detection system, which is described in U.S. 8,064, 647 to Bazakos et al., and which does not require self-alignment of the iris, multiple regions of the iris are imaged and subjected to segmentation algorithms that are capable of outlining the iris. If the initial regional images are not appropriately oriented or sufficiently focused, additional images are taken, and those images processed to obtain a numeric code. The imaging technique disclosed by Bazakos et al. may be useful when the iris is remote from the camera, but also may not be rapid enough for certain applications requiring user identification.

In another instance, as disclosed in U.S. 6,320,610 to Van Sant et al., a mirror is provided on a tilting frame in an automated teller machine (ATM) system so that it can be adjusted to receive light reflected from the iris and then direct the reflected light to a camera for generating an iris image. The Van Sant et al. system does not require cooperation by the user or placement of the iris in line with a camera, but it may only be useful in larger electromechanical devices such as ATMs.

Thus, current iris recognition systems are generally limited in their application because they either require actual cooperation by the user and/or require that the user places his or her eye or eyes for a few seconds in line with the imaging device. As previously stated, this may be sufficient for some access control applications but not fast enough for others. Additionally, the requirement for the iris to be in line (on-axis) with the imaging device may not be feasible in some identification systems, e.g., identification systems for use with head-mounted technologies.

Accordingly, it would be useful to have imaging systems capable of imaging the iris quickly and accurately. Systems that provide off-axis imaging of the iris would also be beneficial. Methods of using the iris imaging systems for access control would also be useful.

### SUMMARY

Described herein are systems for imaging the iris. The systems generally include an off-axis (i.e., off center of the eye or iris) imager attached to an optical device. The off-axis imager typically comprises a lens and an imager/camera body. Exemplary optical devices include without limitation, head-mounted devices such as eyeglasses and goggles, as well as devices comprising one or more eyepieces such as a monocle, binoculars, a telescope, a microscope, other types of viewing scopes, or any other compound optical system used for viewing (e.g., digital SLR cameras). In some instances, the off-axis imager is capable of obtaining images without being attached to an optical device. For example, the off-axis imager may be a digital camera. Here the pictures taken by the digital camera may be configured to include information relating to the identity of the person taking the picture.

The off-axis imager may be mounted to the lower rim of a pair of eyeglasses. In order to obtain clear and/or accurate images, the lens of the off-axis imaging device may be provided with a degree of tilt that adjusts the angle of the plane of focus to be parallel with the plane of the object being imaged, e.g., the plane of the iris, as well as a shift offset.

Work has been done on off-axis iris recognition, often under the heading of "non-cooperative iris recognition." However, in this instance, the existing body of research focuses on the problem of recognition when an iris image is only fleetingly acquired. This circumstance differs substantially from the context of the systems and methods described herein, in which the relative geometry between the imager and the iris is known in advance to a substantial degree.

Methods for imaging the iris are also described herein. The methods generally include providing an optical device having an off-axis imager attached thereto and imaging an iris of an individual using the off-axis imager. The iris images may be used to obtain biometric information from the individual. A processor included with the systems may be used to process the biometric information using iris algorithms to convert it to iris codes, which may then be used to verify the identity of the individual.

### BRIEF DESCRIPTION OF THE DRAWINGS

FIG. 1 illustrates imaging of an iris with an on-axis camera.
FIG. 2 is an exemplary illustration of iris imaging using an off-axis camera.
FIG. 3 is an exemplary illustration of iris imaging using an off-axis camera where tilt has been applied to the lens.
FIG. 4 is an exemplary illustration of iris imaging using an off-axis camera where a shift offset has been applied to the lens.

### DETAILED DESCRIPTION

Described herein are systems and methods for imaging the iris. The systems and methods may employ an off-axis imager to image the iris and subsequently extract biometric information as a means of verifying the identity of the user with a high degree of accuracy. In some variations, the lens of the off-axis imager is tilted and/or shifted to appropriately position the camera lens for iris imaging.

As previously stated, iris imaging can be used as a powerful means of biometric identification. The pattern of muscle fibers in the iris of the eye forms a stable and unique pattern for each person. Biometric accuracy generally relies on how well the iris image is resolved, focused, segmented, and extracted. When acquiring iris images, the number of "on-iris" pixels, iris exposure, dynamic range, and focus must all be sufficiently precise to produce a high quality image that captures the intricacy of the iris tissue structure.

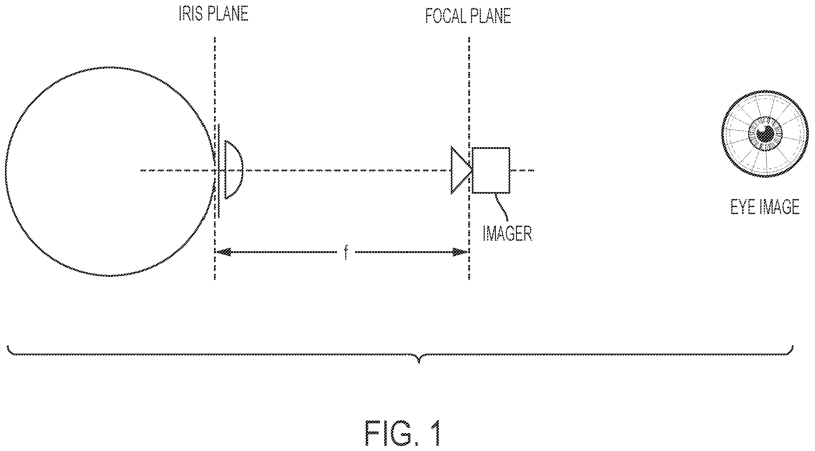

In many existing systems, as shown in FIG. 1, a camera (imager) near to the eye of the target is used to make an image of the iris from which identifying features can then be extracted. Here the camera is close and the iris plane and focal plane are parallel to each other, but the need for a very short focal length (f) makes imaging very difficult, as the necessary aperture makes the effective depth of field very small. Furthermore, the camera is located right in front of the eye, which would block the user's field of view if implemented in a head-mounted system such as goggles or a pair of eyeglasses.

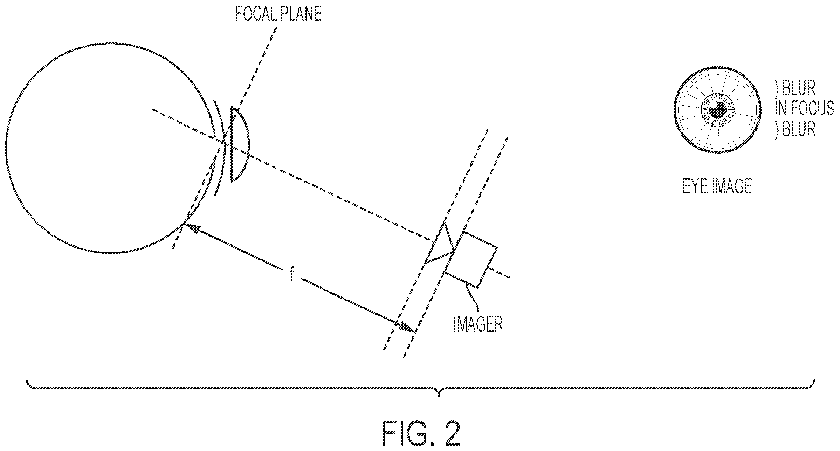

If the camera or imager is located off-axis (i.e., off center of the eye or iris), as would be the case in a head-mounted system, and as shown in FIG. 2, a problem may be created where the plane of the iris (which is flat) and the focal plane are not parallel. Given a small depth of field imager, the result would be blurring and distortion for a large and potentially unacceptable fraction of the iris.

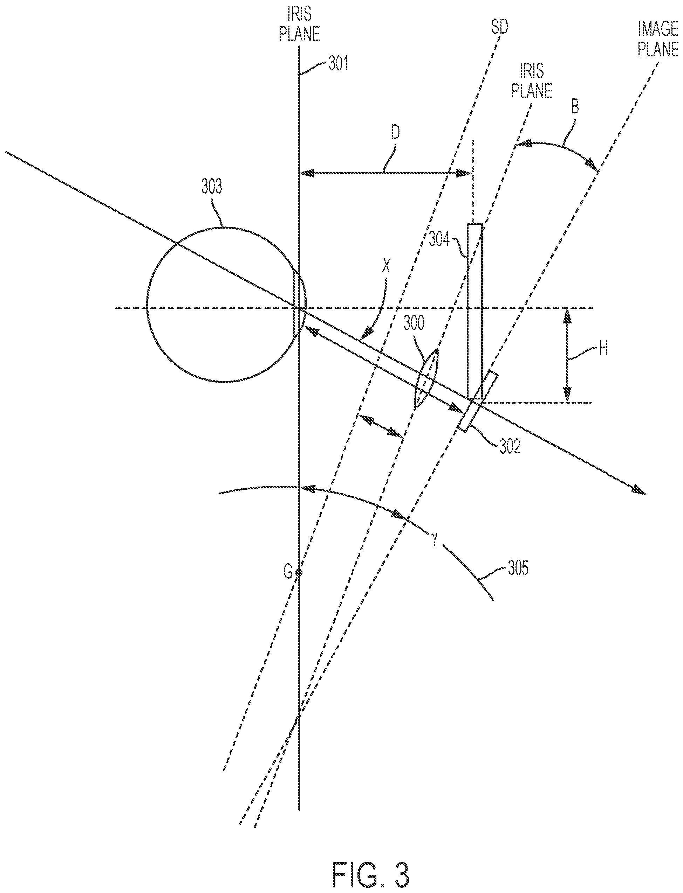

One solution to the problem mentioned above is to provide the camera with a tilt-shift lens that would adjust the angle of the plane of focus to be parallel with the plane of the iris, as illustrated in FIG. 3. Referring to FIG. 3, the lens (300) of an off-axis camera or imager (302) is tilted (rotated) to change the focal plane of the imager to be parallel with the plane of the iris. In general, tilt can be used to control the orientation of the plane of focus.

To further explain, a camera lens can provide sharp focus on only a single plane. Thus, without tilt in the scenario of FIG. 2, the iris image is taken on a focal plane that runs parallel to the lens/imager (and which is perpendicular to the lens axis); objects in sharp focus are all at the same distance from the camera, as measured parallel to the axis normal to both the lens and the imager, while others at different distances from the camera are blurry. As illustrated in FIG. 3, an eye (303) is shown that is to be imaged with an off-axis imager comprising a lens (300) and an imager/camera body (302). Imager body (302) is attached near or to the lower edge of a display (304). The display can be a transparent display such as the lens of a pair of eyeglasses. The lens (300) is tilted (e.g., by tilt angle (*ψ*), (305)) so that the plane of focus is restored to be parallel to the plane of the iris (301). Objects lying in this plane, though at different distances from the camera, can all be sharply focused onto the imager body (302). Thus, it may be beneficial to have a camera lens capable of tilting, or capable of being mounted in a tilted position, when attempting to obtain accurate images of the iris from a head-mounted device.

The off-axis imagers described herein may include a lens configured with a tilt (tilt angle) ranging from between about 2.0 to about 8.5 degrees (lens angle relative to the imager plane). For example, on a frame of the kind found on typical eyeglasses, the amount of lens tilt (lens angle relative to the imager plane) may be about 2.0 degrees, about 2.5 degrees, about 3.0 degrees, about 3.5 degrees, about 4.0 degrees, about 4.5 degrees, about 5.0 degrees, about 5.5 degrees, about 6.0 degrees, about 6.5 degrees, about 7.0 degrees, about 8.0 degrees, or about 8.5 degrees. It is understood that the degree of tilt may be smaller or larger depending on other values used when applying the Scheimpflug rule, which is a known geometric rule that describes the orientation of the plane of focus of an optical system when the lens plane is not parallel to the image plane. In general, the off-axis imagers include a lens with a fixed degree of tilt; however, in some instances the off-axis imager may have a lens configured with an adjustable tilt.

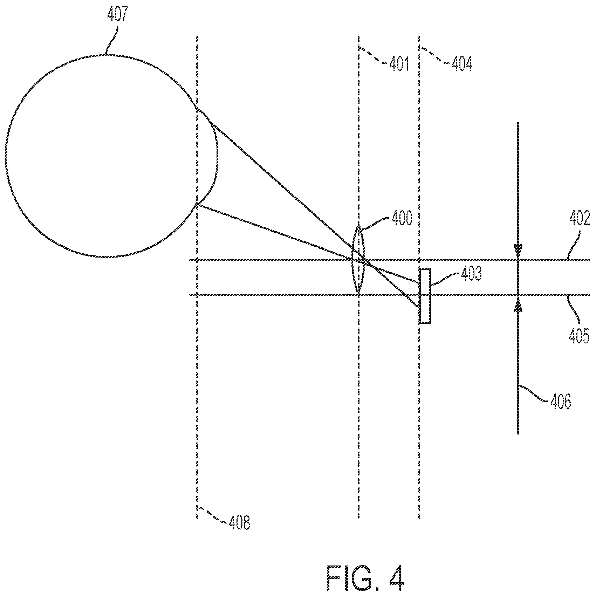

In addition to tilt, the off-axis imagers may include a lens configured to provide a shift offset. Referring to FIG. 4, lens shift refers to a displacement (406, measurement between 405 and 402) of the lens (400) such that the displacement is both confined to the plane (401) of the lens (400), and such that the plane of the lens is kept parallel to the plane (404) of the imager body (403). Such a displacement leaves the focal plane (408) of the lens (400) also parallel to the lens and imager planes (401 and 404, respectively). In effect, shift offset allows adjustment of the position of the iris in the image area without changing the imager (camera) angle; in effect the imager can be aimed at the eye (407) and then a shift offset (406) or movement applied as an alternative to reorienting the imager body (403). Shifting a lens may also allow different portions of the iris image to be cast onto the image plane, similar to cropping an area along the edge of an image. Adding a shift function to a lens will generally permit the focal plane of the imager to remain parallel to the plane of the iris while still taking in the full height of the iris, as illustrated in FIG. 4. This will allow vertical lines in the iris to be perfectly vertical in the resultant photographed image, and more generally to eliminate one important form of distortion from the resulting image.

The off-axis imagers described herein may be configured to have a (lens) shift ranging from between about 1.0 and about 2.5 mm. For example, on a frame of the kind found on typical eyeglasses, the amount of shift may be about 1.0 mm, about 1.1 mm, about 1.2 mm, about 1.3 mm, about 1.4 mm, about 1.5 mm, about 1.6 mm, about 1.7 mm, about 1.8 mm, about 1.9 mm, about 2.0 mm, about 2.1 mm, about 2.2 mm, about 2.3 mm, about 2.4 mm, or about 2.5 mm. Similar to tilt, it is understood that the amount of shift may be smaller or larger depending on other values used when applying the Scheimpflug rule. The off-axis imagers also generally include a lens where the shift offset is fixed; however, in some instances the off-axis imager may have a lens configured to have an adjustable amount of shift.

In one variation, the head-mounted system is a pair of eyeglasses comprising a transparent display (lens or lenses of the eyeglasses), an upper rim (upper frame), a lower rim (lower frame), and an imager attached or mounted to the lower rim about 20 mm below the optic axis (of the eye in rest position). The depth to the iris (measured perpendicular to the transparent display) may range between 15 to 30 mm. Here, in order to restore the plane of focus of the off-axis imager to be parallel with the plane of the iris (and if the imager has a 1.62 mm focal length lens and a distance from the lens to the camera body of 1.7 mm), the amount of lens tilt may be between 2.1 and 8.2 degrees (lens angle relative to the imager plane), or the shift offset between 1.1 and 2.3 mm (as calculated using the Scheimflug equation). Accordingly, if the pair of glasses includes an imager having a fixed geometry, i.e., a fixed tilt angle of the lens and a fixed shift offset of the camera, the tilt angle may be fixed between about 2.1 and about 8.2 degrees, or the shift offset may be fixed between about 1.1 and about 2.3 mm. A combined implementation in which both the tilt and shift are utilized is also possible.

In addition to placement out of the field of view of the user, the iris imaging system is generally sized or otherwise configured for minimal or no interference with a user's field of view of the actual world. The imaging system may be only a few millimeters on each side, e.g., about 5.0 to 8.0 mm on each side, and a few millimeters deep. In some variations, the camera body for imaging the iris includes a plurality of chip-level cameras mounted on or carried by a flexible substrate, for instance, a flexible printed circuit board substrate. The flexible substrate may be put over an anvil and potted with potting compound, to inexpensively form an essentially wide angle lens. For example, tiny cameras may be built with a layer approach, using wafer level technology.

Once an image of the iris is taken, data can be extracted relating to various iris patterns and turned into a numeric iris code. Given that the cameras would be viewing the iris from below and/or the side, the code generated for the head-mounted device would not have to be rotation invariant.

Once a focused and centered image is obtained by the iris imaging system, the digitized image may be passed to a processor to compute an iris code in any suitable manner, e.g., as defined by U.S. Pat. No. 5,291,560 to Daugman, or by various segmentation methods, e.g. as defined by U.S. 8,064,647 to Bazakos et al. The computed iris code is then compared to the iris code which corresponds to the user. If the codes match, the user's identity is verified. Verification or identification processing may be performed at a remote location, and it is understood that in these instances the iris code may be securely transmitted to and/or from the head-mounted device.

When analyzing iris images of users, the segmentation approach may be a useful and relatively straightforward process of edge detection and circular fitting. In some variations, the iris biometric approach may include using a POSE^{™} (i.e., Honeywell International Inc.-polar segmentation) technique to move virtually immediately the analysis to a polar domain and execute a 1-D segmentation of the iris borders, using one or more symmetry properties to detect one or more non-occluded areas of the iris. Using this method, non-symmetric regions can correspond to areas partially covered by eyelashes, eyelids, etc.

The invention may relate to any of the following items:
Item 1. A system for imaging the iris comprising an optical device and an off-axis imager attached to the optical device, wherein the off-axis imager comprises a lens and a camera body.
Item 2. The system of item 1, wherein the optical device comprises a head-mounted device.
Item 3. The system of item 2, wherein the head-mounted device comprises a pair of eyeglasses or goggles.
Item 4. The system of item 3, wherein the head-mounted device comprises a pair of eyeglasses, the pair of eyeglasses comprising a frame having an upper rim and a lower rim, and a transparent display.
Item 5. The system of item 1, wherein the optical device comprises an eyepiece.
Item 6. The system of item 5, wherein the eyepiece is a monocle or binoculars.
Item 7. The system of item 5, wherein the eyepiece is contained within a telescope, microscope, or a compound optical system used for viewing.
Item 8. The system of item 4, wherein the off-axis imager is attached to the lower rim of the frame.
Item 9. The system of item 1, wherein the lens of the off-axis imager has a tilt ranging from about 2.0 to about 8.5 degrees.
Item 10. The system of item 1, wherein the lens of the off-axis imager has a shift offset ranging from about 1.0 to about 2.5 mm.
Item 11. A method for imaging an iris comprising providing an optical device having an off-axis imager attached thereto and imaging an iris of an individual using the off-axis imager, wherein the off-axis imager comprises a lens and a camera body.
Item 12. The method of item 11, further comprising obtaining biometric information from the imaged iris and processing the biometric information to verify the identity of the individual.
Item 13. The method of item 12, wherein the biometric information is converted into an iris code.
Item 14. The method of item 11, further comprising tilting the lens of the off-axis imager to adjust a focal plane of the camera body to be parallel with a plane of the individual's iris.
Item 15. The method of item 14, wherein the lens is tilted between about 2.0 to about 8.5 degrees.
Item 16. The method of item 15, further comprising shifting the lens of the off-axis imager between about 1.0 to about 2.5 mm.
Item 17. The method of item 11, wherein imaging the iris comprises partially or entirely imaging the iris of the individual.
Item 18. The method of item 11, wherein one or both irises of the individual are partially or entirely imaged.

## Claims

1. A system for imaging the iris of a user comprising an optical device and an off-axis imaging device (302) attached to the optical device, wherein the off-axis imaging device (302) comprises a lens (300, 400) corresponding to a lens plane (401) and an imaging device body (303, 402) coupled to the lens (300, 400) and corresponding to an imager plane (404),
wherein:
the off-axis imaging device is configured to capture an image of an iris of an eye (303, 407) of the user, the iris corresponding to an iris plane (301),
the lens (300, 400) of the off-axis imaging device is configured to shift in a direction parallel to the imager plane (404), and
the lens plane (401) is parallel to the imager plane (404).

2. The system of claim 1, wherein the optical device comprises a head-mounted device.

3. The system of claim 2, wherein the head-mounted device comprises a pair of eyeglasses or goggles.

4. The system of claim 3, wherein the head-mounted device comprises a pair of eyeglasses, the pair of eyeglasses comprising a frame having an upper rim and a lower rim, and a transparent display (304).

5. The system of claim 1, wherein the optical device comprises an eyepiece, which is:
a monocle or binoculars;
or is contained within a telescope, microscope, or a compound optical system used for viewing.

6. The system of claim 4, wherein the off-axis imaging device (302) is attached to the lower rim of the frame.

7. The system of any of claims 1-6, wherein the lens (300, 400) of the off-axis imaging device (302) has a tilt (305) ranging from about 2.0 to about 8.5 degrees and/or a shift offset (406) ranging from about 1.0 to about 2.5 mm.

8. A method for imaging an iris comprising:
providing a system according to any of claims 1 to 7 with an optical device and an off-axis imaging device (302) attached thereto; and
imaging an iris of an individual using the off-axis imaging device (302), wherein the off-axis imaging device (302) comprises a lens (300, 400) and a camera body (303, 402).

9. The method of claim 8, further comprising obtaining biometric information from the imaged iris and processing the biometric information to verify the identity of the individual.

10. The method of claim 9, wherein the biometric information is converted into an iris code.

11. The method of any of claims 8-10, further comprising tilting the lens (300, 400) of the off-axis imaging device (302) to adjust a focal plane (408) of the camera body (303, 402) to be parallel with a plane of the individual's iris.

12. The method of claim 11, wherein the lens (300, 400) is tilted between about 2.0 to about 8.5 degrees.

13. The method of claim 12, further comprising shifting the lens (300, 400) of the off-axis imaging device (302) between about 1.0 to about 2.5 mm.

14. The method of any of claims 8-13, wherein imaging the iris comprises partially or entirely imaging the iris of the individual.

15. The method of any of claims 8-14, wherein one or both irises of the individual are partially or entirely imaged.
